# EUROPÄISCHE PATENTSCHRIFT

(11) **EP 2 504 150 B1**
(45) Veröffentlichungstag und Bekanntmachung des Hinweises auf die Patenterteilung: **13.12.2017**
(21) Anmeldenummer: 10778822.6
(22) Anmeldetag: 29.10.2010
(51) Int. Cl.: B29C 65/02, B65B 7/08, B65B 51/14, B31B 70/00, B29C 65/08, B29C 65/16, B65B 51/22, B65D 30/04, B65D 75/20, B29K 23/00

(54) **VERFAHREN ZUM VERSCHLIESSEN EINES SACKKÖRPERS**
METHOD FOR CLOSING A BAG BODY
PROCÉDÉ POUR FERMER UN CORPS DE SAC

(30) Priorität: 23.11.2009 AT 18552009
(43) Veröffentlichungstag der Anmeldung: 03.10.2012
(73) Patentinhaber: LOHIA CORP LIMITED, Kanpur, Uttar Pradesh 208022 (IN)
(72) Erfinder: SCHOBESBERGER, Ernesto, 1040 Wien (AT); WORFF, Herwig, 4810 Gmunden (AT)
(74) Vertreter: Müller-Boré & Partner Patentanwälte PartG mbB
(86) Internationale Anmeldenummer: PCT/AT2010/000410
(87) Internationale Veröffentlichungsnummer: WO 2011/060460

(56) Entgegenhaltungen:
- FR-A- 1 475 799
- GB-A- 990 529
- GB-A- 1 030 789
- US-A- 3 422 596
- US-A- 3 496 059
- US-A- 3 535 184
- US-A- 4 373 979
- US-A- 4 558 463
- US-B1- 6 641 882

## Beschreibung

Die Erfindung betrifft ein Verfahren zum Verschließen eines Sackkörpers aus einem Gewebe aus monoaxial verstreckten Polymer-, insbesondere Polyolefin-, vorzugsweise Polypropylenbändchen, bei dem wenigstens zwei Gewebelagen mittels einer Naht verbunden werden, sowie einen Sack aus einem Gewebe aus monoaxial verstreckten Polymer-, insbesondere Polyolefin-, vorzugsweise Polypropylenbändchen, der ein- oder beidseitig verschlossen ist.

Zur Verpackung von Gütern, insbesondere Schüttgütern, werden verschiedene Arten von Säcken verwendet. Die Erfindung bezieht sich auf Säcke, die aus einem Gewebe aus monoaxial verstreckten Polymer-, insbesondere Polyolefin- oder Polypropylenbändchen bestehen. Diese Bändchen werden durch Streckung von Polymer-, insbesondere Polyolefin- oder Polypropylenfolien üblicherweise auf die 4 bis 10-fache Länge hergestellt, wodurch die Molekülketten in Bändchenlängsrichtung ausgerichtet werden und in diese Richtung ca. die 6 bis 10-fache Festigkeit gegenüber der ursprünglichen Folie aufweisen. Die Bändchenbreite beträgt üblicherweise ca. 1,5-10 mm, die Dicke 20-80 *µ*m.

Eine grobe Einteilung solcher Säcke wird durch die Unterscheidung in Kissen- und Kastenform getroffen.

Eine Kissenform von Säcken entsteht üblicherweise durch Konfektionierung der Böden mit einer Textilnaht oder einer Schweißnaht. Kissenförmige Säcke werden als teil-fertig konfektionierte, oben offene Säcke oder aber als Schlauchmaterial auf einer Rolle geliefert. Teil-fertig konfektionierte oben offene Säcke werden nach Befüllen üblicherweise verschlossen. Aus Schlauchmaterial hergestellte Säcke werden direkt auf der Abfüllanlage, einer sogenannten FFS-Anlage (Form, Fill and Seal), durch eine Naht am Boden konfektioniert und nach dem Füllen oben ebenfalls durch eine Naht verschlossen. Im Falle einer Textilnaht mit Nadel ist dabei der Umstand nachteilig, dass es zu einem Austritt des Sackinhalts über die Nahtperforierungen kommen kann. Außerdem verursacht die Nahtperforierung des Gewebes Schwachstellen, sodass der Sack an der Nahtstelle aufreißen kann. Drüber hinaus ist die maschinelle Erstellung der Textilnaht mit Nadel mit einer Reihe von Problemen verbunden, wie beispielsweise der Gefahr des Nadelbruchs und des Reißens des für die Naht verwendeten Fadens. Ein weiterer Nachteil ist die beim Nähen begrenzte Vorschubgeschwindigkeit des Nähkopfes, sodass mit gegenwärtig verfügbaren Maschinen eine Verarbeitung von lediglich ca. maximal 40 bis 45 Säcken pro Minute möglich ist. Alternativ zur Textilnaht kann bei Foliensäcken eine Schweißnaht in analoger Weise zur oben beschriebenen Textilnaht am Boden und nach dem Befüllen oben angebracht werden.

Im Zusammenhang mit eine Kastenform aufweisenden Säcken sind bereits verschiedene Verfahren zum Verschließen der Böden bekannt geworden. Meist wird der gefaltete Boden nach dem Stand der Technik mit einem Mehrkomponentenkleber aufwendig verklebt, da Polypropylen- und Polyäthylen-Materialien, aus denen das Gewebe üblicherweise besteht, sich nur unter Schwierigkeiten verkleben lassen. Neben der umständlichen Verklebungsprozedur weisen die bekannten Kleber weitere Nachteile wie geringe Haltbarkeit, Sprödigkeit infolge von Temperaturwechsel und Verlust der Haftwirkung durch Feuchtigkeitseinflüsse auf. In der WO 95/30598 A1 ist in diesem Zusammenhang ein verbessertes Verfahren beschrieben, bei dem mindestens ein Sackende, insbesondere eine Bodenfläche, über eine Zwischenschicht aus insbesondere thermoplastischem Kunststoff-, insbesondere Polyolefin-, vorzugsweise Polypropylenmaterial durch Wärmeeinwirkung mit einem Deckblatt aus Gewebe aus monoaxial verstreckten Polymer-, insbesondere Polyolefin-, vorzugsweise Polypropylenbändchen, verbunden wird und bei dem nur der außen befindliche Oberflächenbereich, insbesondere weniger als 30% der Materialdicke der Gewebebändchen, von Bodenfläche und Deckblatt infolge der Wärmeeinwirkung desorientierte Moleküle aufweist, wobei im übrigen Materialbereich die Molekülorientierung erhalten bleibt. Nachteilig bei diesem Verfahren ist die Kontrolle und Begrenzung der Wärmeeinwirkung derart, dass tatsächlich nur der außen befindliche Oberflächenbereich entsprechend erhitzt und von einer Desorientierung der Moleküle betroffen ist. Bereiche des Gewebes mit desorientierten Molekülen haben im Vergleich zu Bereichen mit durch die Verstreckung des Materials orientierten Molekülen eine wesentlich geringere Festigkeit.

US 4,373,979 beschreibt ein Verfahren zum Verschließen eines Sacks.

Die Erfindung zielt nun darauf ab, den Sackverschluss derart zu gestalten, dass das Material des Sacks durch den Verschluss möglichst wenig geschwächt wird, sodass der verschlossene Sack auch unter hohen mechanischen Belastungen insbesondere im Bereich der Verschlussnaht nicht reißt. Außerdem soll eine im Vergleich zur Herstellung einer herkömmlichen genähten Verschlussnaht deutlich erhöhte Durchsatzgeschwindigkeit ermöglicht werden. Weiters soll die Prozesssicherheit erhöht, die Wartung der Maschinen reduziert, die Produktionskosten minimiert und die optische Vorteilhaftigkeit des Produkts gewährleistet werden. Die Erfindung bezieht sich dabei vor allem, aber nicht ausschließlich, auf Säcke mit einer Kissenform. Diese Aufgabe wird durch die in den Ansprüchen 1 bzw. 2 gekennzeichneten Verfahren gelöst. Die Naht wird als Schweißnaht umfassend eine Vielzahl von in Abstand voneinander angeordneten Schweißstellen ausgebildet. Bevorzugt wird die Schweißnaht als Ultraschall- oder Laserverschweißung vorgenommen. Die Ultraschallverschweißung erlaubt es hierbei, in einfacher Weise definierte Schweißstellen zu erhalten, sodass der von der Verschweißung betroffene Anteil des Gewebes im Bereich der Schweißnaht reduziert werden kann. Es sind aber auch andere Schweißverfahren denkbar, wie beispielsweise das Schweißen mit einem heißen Stempel (statisch oder als Abrollstempel oder Rolle). Dadurch, dass die Schweißnaht erfindungsgemäß eine Vielzahl von in Abstand voneinander angeordneten Schweißstellen umfasst, bevorzugt aus diesen besteht, wird das Gewebe nur stellenweise durch die Schweißung geschwächt, wobei die Festigkeit zwischen den einzelnen Schweißstellen gänzlich erhalten bleibt. Da somit durch die Verschweißung in nur geringem Ausmaß die Ausrichtung der Molekülketten verloren geht, erleidet das Gewebe kaum Festigkeitseinbußen. Bevorzugt wird dabei derart vorgegangen, dass die Schweißstellen punktförmig ausgebildet werden, wobei bevorzugt die Schweißstellen quer zur Bändchenrichtung gegeneinander versetzt angeordnet werden. Durch die versetzte Anordnung der Schweißstellen wird die Entstehung von Rissfortpflanzungslinien wirksam verhindert. Die Schweißstellen können beispielsweise in mehreren Reihen angeordnet werden, wobei die Schweißstellen einer Reihe zu den Schweißstellen einer benachbarten Reihe auf Lücke angeordnet sind.

Beim Kunststoff-Ultraschallschweißen wird den zu verschweißenden Bändchen des Gewebes durch hochfrequente mechanische Schwingungen an den Schweißstellen Wärme zugeführt, wodurch das Material aufgeschmolzen oder zumindest erweicht wird. Dabei weisen die Fügekraft und die Ultraschallschwingung dieselbe Wirkrichtung auf. Die eingeleiteten Longitudinalwellen bewirken eine Druckschwellbeanspruchung im Werkstoff und in der Fügezone, die zu einer Plastifizierung des Kunststoffes führt. Bei Beendigung der Energieeinschallung kühlt das Material an den Schweißstellen unter Druck ab und es entsteht eine dauerhafte, mechanisch stabile Verbindung.

Die Schweißnaht wird mit einer der Breite des Sackkörpers im wesentlichen entsprechenden Länge ausgebildet, sodass auf Grund der Schweißnaht die betreffende Seite des Sackes im wesentlichen vollkommen verschlossen ist. Bei Säcken mit einem Ventil, das beispielsweise durch Einschlagen eines Ecks am Sackende nach innen entsteht, wird die Verschweißung ebenfalls über die - auf Grund des eingeschlagenen Ecks entsprechend verringerte - Breite des Sackkörpers vorgenommen und erstreckt sich dementsprechend auch über das eingeschlagene Gewebe.

Bevorzugt ist weiters eine Verfahrensweise, bei der die Schweißnaht mit einer Breite von höchstens 10 cm, bevorzugt höchstens 8 cm, bevorzugt höchstens 5 cm, bevorzugt höchstens 3 cm ausgebildet wird, wodurch der Aufwand für die Verschweißung minimiert und der von der Verschweißung betroffene Bereich reduziert werden kann, ohne die Festigkeit der Schweißverbindung zu gefährden.

Bevorzugt wird so vorgegangen, dass die Vielzahl von in Abstand voneinander angeordneten Schweißstellen in einer Dichte von höchstens 15, bevorzugt höchstens 10, bevorzugt höchstens 5 Schweißstellen pro cm² aufgebracht wird.

Vorteilhaft bei der erfindungsgemäßen Verfahrensweise ist, dass es keine durch Nadelperforierung des Gewebes verursachte Schwachstellen gibt. Außerdem ist das Verschweißen mit niedrigen Kosten verbunden und zeichnet sich durch eine hohe Arbeitsgeschwindigkeit aus. Mit dem erfindungsgemäßen Verfahren können deutlich mehr Säcke pro Minute verschlossen werden als mit den aus dem Stand der Technik bekannten Verfahren. Die Schweißverbindung ist keiner Alterung oder Versprödung unterworfen. Es gibt darüber hinaus einfache Entsorgungsmöglichkeiten, da der Sack ausschließlich aus sortenreinem Material besteht.

Allerdings besteht bei einer Schweißnaht der genannten Art die Gefahr, dass eine auf die Schweißnaht wirkende Schälbelastung, bei welcher die miteinander verbundenen Gewebelagen in einer Richtung quer zur Gewebeoberfläche auseinander gezogen werden zu einem Lösen der Schweißverbindung führt. Es sollte daher prinzipiell darauf geachtet werden, dass eine derartige Schweißverbindung lediglich auf Scherung beansprucht wird, d.h. lediglich einer Belastung parallel zur Gewebeoberfläche unterworfen wird. Zu diesem Zweck sieht eine Ausführungsform des erfindungsgemäßen Verfahrens vor, dass ein wenigstens ein offenes Ende aufweisender flacher Endabschnitt des Sackkörpers umgelegt wird und mit Hilfe der Schweißnaht mit dem Sackkörper verbunden wird. Durch die Umlegung des Endabschnittes ist die Schweißnaht keiner Schälbelastung mehr ausgesetzt, sodass die Naht auch sehr hohen mechanischen Belastungen standhalten kann. Dies ist der Fall, wenn der umgelegte Endabschnitt lediglich mit der dem umgelegten Endabschnitt zugewandten Gewebelage des Sackkörpers verschweißt wird.

In einer anderen Ausführungsform der vorliegenden Erfindung kann auch so vorgegangen werden, dass die Verschweißung der zwei Gewebelagen des Endabschnittes im nicht umgelegten Zustand des flachen Endabschnittes erfolgt, dass danach der verschweißte Endabschnitt umgelegt wird und dass der umgelegte Endabschnitt schließlich mit dem Sackkörper verbunden wird. Das Verbinden kann dabei beispielsweise durch Kleben, insbesondere Extrusionskleben oder durch Heißluftschweißen erfolgen.

Der umgelegte Abschnitt weist bevorzugt eine Breite von höchstens 10cm, bevorzugt höchstens 8cm, bevorzugt höchstens 5cm, bevorzugt höchstens 3cm auf.

Zur Vermeidung eines miteinander Verschweißens der dem umgelegten Endabschnitt zugewandten Gewebelage und der dem umgelegten Endabschnitt abgewandten Gewebelage des Sackkörpers wird mit Vorteil in den Sackkörper eine Trennschicht eingelegt oder eine Trennschicht aufgebracht. Die Trennschicht weist bevorzugt eine höhere Wärmeleitfähigkeit auf als das Sackgewebe. Die Trennschicht, insbesondere eine metallhältige Trennschicht, wird bevorzugt durch ein Beschichtungsverfahren aufgebracht, Als Trennschicht kommt hierbei bevorzugt ein metallhältiger Lack zur Anwendung. Eine derartige Trennschicht führt aufgrund des Metallgehalts zu einer Wärmeableitung, sodass die dem umgelegten Endabschnitt abgewandte Gewebelage des Sackkörpers einem geringeren bzw. im Wesentlichen keinem Wärmeeintrag unterliegt. Der Wärmeeintrag über den zu Ultraschallschwingungen anregbaren Schwingkörper erfolgt dabei bevorzugt auf den umgelegten Endabschnitt.

Eine Schälbelastung der Schweißverbindung wird jedenfalls immer wirksam verhindert, wenn, wie dies einer bevorzugten Weiterbildung entspricht, ausgehend von der auf Grund der Umlegung zuoberst zu liegen kommenden Gewebelage lediglich eine Anzahl unmittelbar aufeinanderliegender Gewebelagen durch Ultraschallverschweißung miteinander verbunden wird, die der um eins vermehrten Hälfte der Gesamtzahl der Gewebelagen entspricht.

Gemäß einem weiteren Aspekt der Erfindung wird ein Sack gemäß Anspruch 11 bereitgestellt.
In noch einem weiteren Aspekt der vorliegenden Erfindung wird ein Sack gemäß Anspruch 12 bereitgestellt.

Die Erfindung wird nachfolgend anhand eines in der Zeichnung schematisch dargestellten Ausführungsbeispiels näher erläutert.

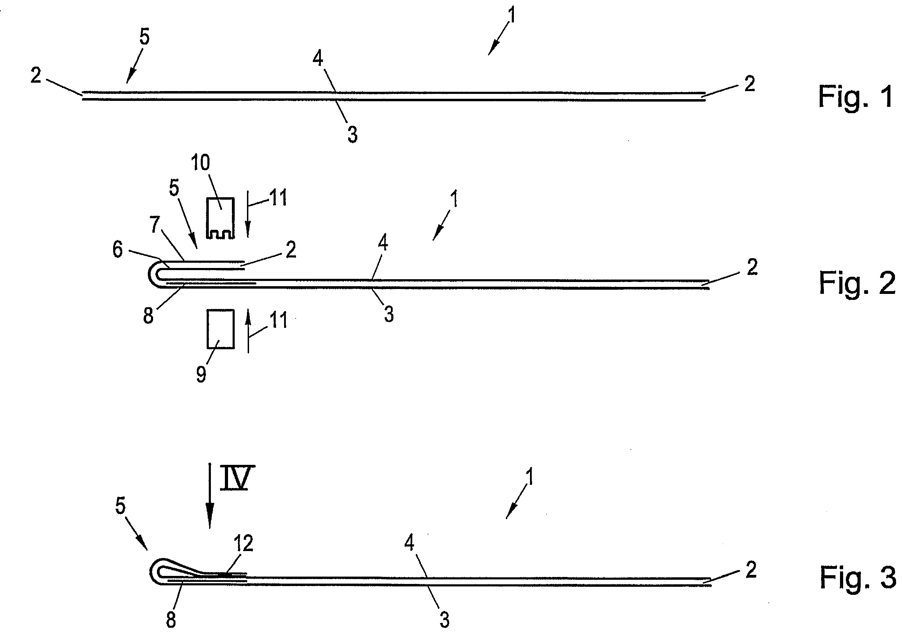

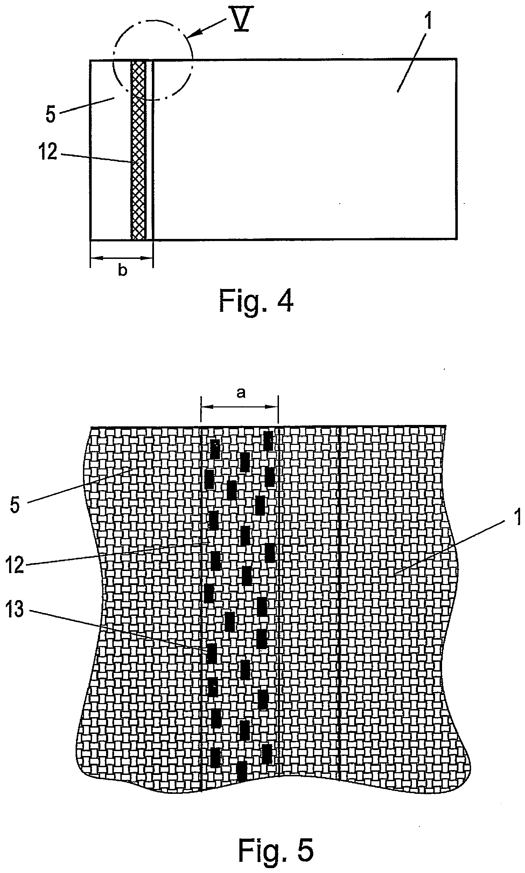

In dieser zeigen Fig. 1 einen schematischen Querschnitt eines Schlauchgewebes zur Herstellung eines erfindungsgemäßen Sacks, Fig. 2 das Gewebe mit umgelegtem Endabschnitt, Fig. 3 den Endabschnitt in verschweißtem Zustand, Fig. 4 eine Ansicht gemäß dem Pfeil IV der Fig. 3 und Fig. 5 eine vergrößerte Ansicht des Bereichs V der Fig. 4.

In Fig. 1 ist ein Sack 1 aus einem 'Schlauchgewebe in flachem Zustand dargestellt, dessen offenes Ende 2 zur Herstellung eines Sacks mit Kissenform verschlossen werden soll. Im Ausgangszustand gemäß Fig. 1 sind zwei Gewebelagen 3 und 4 ersichtlich. Wenn es sich um einen Sack mit Seitenfaltung handelt, was im Rahmen der vorliegenden Erfindung ohne weiteres möglich ist, sind im Bereich der Seitenfaltung vier Gewebelagen vorhanden. Die Erfindung wird nachfolgend aber lediglich an Hand eines Sacks ohne Seitenfaltung erläutert.

Zum Verschließen des offenen Endes 2 des Sacks 1 wird nun wie folgt vorgegangen. Zunächst wird, wie dies in Fig. 2 dargestellt ist, der entsprechende Endabschnitt 5 auf den Sackkörper umgelegt, sodass im Bereich der Umlegung insgesamt vier Gewebelagen aufeinander zu liegen kommen, nämlich die Lagen 3, 4, 6 und 7. Zwischen den Gewebelagen 3 und 4 ist eine Trennschicht 8 angeordnet. Bei der Trennschicht kann es sich dabei um eine Beschichtung handeln, die zumindest entweder auf der der Gewebelage 3 zugewandten Seite der Gewebelage 4 oder auf der der Gewebelage 4 zugewandten Seite der Gewebelage 3 aufgebracht ist. Die Trennschicht 8 verhindert beim nachfolgenden Verschweißen, insbesondere Ultraschallverschweißen, dass die Gewebelagen 3 und 4 miteinander dauerhaft verbunden werden und die Gewebeschicht 3 beschädigt wird.

In Fig. 2 ist schematisch eine Ultraschallschweißvorrichtung dargestellt, umfassend einen Amboss 9 und eine Sonotrode 10. Zum Verschweißen werden die Gewebelagen 3, 4, 6 und 7 zwischen dem Amboss 9 und der Sonotrode 10 eingeklemmt, indem der Amboss 9 und die Sonotrode 10 entsprechend der Pfeile 11 auf den zu verschweißenden Abschnitt zu bewegt werden. Die Sonotrode wird in Ultraschallschwingung versetzt, wodurch an den Kontaktstellen der Sonotrode 10 am Gewebe eine Verschweißung bewirkt wird. Dabei werden die Gewebelagen 4, 6 und 7 miteinander verschweißt. Die Trennschicht 8 verhindert eine dauerhafte Verbindung der Gewebelagen 3 und 4. Wenn die Gewebelagen 3 und 4 nach dem Schweißvorgang trotz der Trennschicht 8 aneinanderhaften, so ist auf Grund der Trennschicht 8 jedenfalls keine dauerhafte Verbindung zwischen diesen Gewebelagen 3 und 4 gegeben, sondern es können diese beiden Gewebelagen ohne weiters händisch voneinander getrennt werden ohne das Material des Gewebes zu beschädigen. Alternativ werden die Gewebelagen ggf. beim Befüllen des Sacks auf Grund des Gewichts des Füllguts voneinander getrennt.

Fig. 3 zeigt das Sackende im verschlossenen Zustand. Dadurch, dass die Gewebelagen 3 und 4 nicht miteinander verbunden sind, wirkt das Gewicht des Füllguts nicht im Sinne einer Schälbelastung auf die Verbindungen 4 zu 6 und 6 zu 7, sondern lediglich im Sinne einer Scherbelastung. Die Verbindungen können sehr hohe Scherbelastungen aufnehmen, sodass der Sackverschluss auch bei hohen Belastungen erhalten bleibt.

Fig. 4 zeigt den Sackverschluss in einer Ansicht gemäß Pfeil IV der Fig. 3, wobei ersichtlich ist, dass die Schweißung in Form einer sich über die gesamt Breite des Sacks 1 erstreckenden Schweißnaht ausgebildet ist. Allerdings ist die mit Ultraschall ausgeführte Naht 12 nicht als durchgehende Naht ausgebildet, sondern umfasst, wie sich aus der Detailansicht gemäß Fig. 5 ergibt, eine Vielzahl von versetzt angeordneten Schweißstellen 13. Die versetzte Anordnung der Schweißstellen 13 führt dazu, dass die von der Verschweißung betroffenen Bändchen nicht auf ihrer ganzen Breite durch die von der Verschweißung hervorgerufene Strukturveränderung der Moleküle geschwächt werden. Auf Grund der versetzten Anordnung der Schweißstellen 13 wird eine stabile Verbindung der Gewebelagen erreicht ohne die Festigkeit des Gewebes insgesamt entscheidend zu beinträchtigen. Die Breite a der Naht 12 beträgt bevorzugt höchstens 10cm. Der umgelegte Abschnitt weist bevorzugt eine Breite b von höchstens 10cm, bevorzugt höchstens 8cm, bevorzugt höchstens 5cm, bevorzugt höchstens 3cm auf.

Zur Beibehaltung einer ausreichenden Festigkeit reicht es aus, wenn die Summe der Flächen der Schweißstellen 13 weniger als 50 %, bevorzugt weniger als 25 %, insbesondere weniger als 15 % der Fläche der Schweißnaht 12 beträgt.

Das offene Ende 3 kann nach dem Befüllen des Sacks 1 in gleicher Weise verschlossen werden wie zuvor im Zusammenhang mit der Verschließung des offenen Endes 2 beschrieben.

## Patentansprüche

1. Verfahren zum Verschliessen eines Sackkörpers (1) aus einem Schlauchgewebe aus monoaxial verstreckten Polymer-, insbesondere Polyolefin-, vorzugsweise Polypropylenbändchen, bei dem wenigstens zwei Gewebelagen (3,4,6,7) mittels einer Naht (12) verbunden werden, wobei die Naht (12) als Schweissnaht (12) umfassend eine Vielzahl von in Abstand voneinander angeordneten Schweissstellen (13) ausgebildet wird und wobei die Schweissnaht (12) mit einer der Breite des Sackkörpers im wesentlichen entsprechenden Länge ausgebildet wird,
**dadurch gekennzeichnet, dass** ein wenigstens ein offenes Ende (2) aufweisender flacher Endabschnitt des Sackkörpers (1) umgelegt wird und mit Hilfe der Schweissnaht (12) mit dem Sackkörper (1) verbunden wird, wobei der umgelegte Endabschnitt (5) lediglich mit der dem umgelegten Endabschnitt (5) zugewandten Gewebelage (4) des Sackkörpers (1) verschweisst wird.

2. Verfahren zum Verschliessen eines Sackkörpers (1) aus einem Schlauchgewebe aus monoaxial verstreckten Polymer-, insbesondere Polyolefin-, vorzugsweise Polypropylenbändchen, bei dem wenigstens zwei Gewebelagen (3,4,6,7) mittels einer Naht (12) verbunden werden, wobei die Naht (12) als Schweissnaht (12) umfassend eine Vielzahl von in Abstand voneinander angeordneten Schweissstellen (13) ausgebildet wird, wobei die Verschweissung der zwei Gewebelagen des Endabschnittes im nicht umgelegten Zustand des flachen Endabschnittes erfolgt, danach der verschweisste Endabschnitt umgelegt wird und schliesslich der umgelegte Endabschnitt lediglich mit der dem umgelegten Endabschnitt (5) zugewandten Gewebelage (4) des Sackkörpers (1) verbunden wird, vorzugsweise durch Kleben,
**dadurch gekennzeichnet, dass** die Schweissnaht (12) mit einer der Breite des Sackkörpers im wesentlichen entsprechenden Länge ausgebildet wird.

3. Verfahren nach Anspruch 1 oder 2, **dadurch gekennzeichnet, dass** die Schweissstellen in mehreren Reihen angeordnet werden, wobei Schweißstellen einer Reihe zu den Schweißstellen einer benachbarten Reihe auf Lücke angeordnet sind.

4. Verfahren nach Anspruch 1, 2 oder 3, **dadurch gekennzeichnet, dass** die Verschweissung als Ultraschallverschweissung oder Laserverschweissung vorgenommen wird.

5. Verfahren nach Anspruch 1, 2, 3 oder 4, **dadurch gekennzeichnet, dass** zur Vermeidung eines Miteinanderverschweißens der dem umgelegten Endabschnitt zugewandten Gewebelage und der dem umgelegten Endabschnitt abgewandten Gewebelage des Sackkörpers in den Sackkörper eine Trennschicht eingelegt oder eine Trennschicht aufgebracht wird.

6. Verfahren nach Anspruch 5, **dadurch gekennzeichnet, dass** die Trennschicht eine höhere Wärmeleitfähigkeit als das Sackgewebe aufweist, wobei ein metallhaltiger Lack zur Anwendung kommt.

7. Verfahren nach einem der Ansprüche 1 bis 6, **dadurch gekennzeichnet, dass** die Schweissnaht mit einer Breite von höchstens 10 cm, bevorzugt höchstens 8 cm, bevorzugt höchstens 5 cm, bevorzugt höchstens 3 cm ausgebildet wird.

8. Verfahren nach einem der Ansprüche 1 bis 7, **dadurch gekennzeichnet, dass** die Schweissstellen derart aufgebracht werden, dass die Summe der Flächen der Schweissstellen weniger als 50 %, bevorzugt weniger als 25 %, insbesondere weniger als 15 % der Fläche der Schweissnaht beträgt.

9. Verfahren nach einem der Ansprüche 1 bis 8, **dadurch gekennzeichnet, dass** die Vielzahl von in Abstand voneinander angeordneten Schweissstellen in einer Dichte von mindestens 1, bevorzugt mindestens 2, bevorzugt mindestens 3 Schweissstellen pro cm² aufgebracht wird.

10. Verfahren nach einem der Ansprüche 1 und 3 bis 9, **dadurch gekennzeichnet, dass** ausgehend von der auf Grund der Umlegung zu-Oberst zu liegen kommenden Gewebelage lediglich eine Anzahl unmittelbar aufeinanderliegender Gewebelagen durch Ultraschallverschweissung miteinander verbunden wird, die der um eins vermehrten Hälfte der Gesamtzahl der Gewebelagen entspricht.

11. Sack (1), vorzugsweise mit einer Kissenform, aus einem Schlauchgewebe aus monoaxial verstreckten Polymer-, insbesondere Polyolefin-, vorzugsweise Polypropylenbändchen, der ein oder beidseitig verschlossen ist, wobei wenigstens eine Seite des Sacks mit wenigstens einer Schweißnaht (12) verschlossen ist, die eine Vielzahl von in Abstand voneinander angeordneten Schweissstellen (13) aufweist, und wobei die Schweissnaht (12) mit einer der Breite des Sackkörpers im wesentlichen entsprechenden Länge ausgebildet ist,
**dadurch gekennzeichnet, dass** wenigstens eine verschlossene Seite einen umgelegten Endabschnitt (5) aufweist, der lediglich mit der dem umgelegten Endabschnitt (5) zugewandten Gewebelage (4) des Sackkörpers (1) mittels der Schweissnaht (12) verbunden ist.

12. Sack (1), vorzugsweise mit einer Kissenform, aus einem Schlauchgewebe aus monoaxial verstreckten Polymer-, insbesondere Polyolefin-, vorzugsweise Polypropylenbändchen, der ein oder beidseitig verschlossen ist, wobei wenigstens eine Seite des Sacks mit wenigstens einer Schweißnaht (12) verschlossen ist, die eine Vielzahl von in Abstand voneinander angeordneten Schweissstellen (13) aufweist, und wobei er einen umgelegten Endabschnitt mit zwei miteinander verschweissten Gewebelagen umfasst, wobei dieser umgelegte Endabschnitt lediglich mit der dem umgelegten Endabschnitt (5) zugewandten Gewebelage (4) des Sackkörpers (1) verbunden ist, vorzugsweise durch Kleben,
**dadurch gekennzeichnet, dass** die Schweissnaht (12) mit einer der Breite des Sackkörpers im wesentlichen entsprechenden Länge ausgebildet ist.

## Claims

1. A method for sealing a bag body (1) made from a tubular woven fabric, said fabric is made from monoaxially drawn polymer strips, in particular polyolefin strips or polypropylene strips, in which at least two fabric layers (3,4,6,7) are joined by means of a seam (12), wherein the seam (12) is formed as welding seam (12) comprising a plurality of spaced-apart welding spots and wherein the welded seam (12) is formed with a length corresponding to the width of the bag body, **characterized in that** at least one open end (2) flat portion of the bag body (1) is folded over and connected by means of welding seam (12) to the bag body (1), wherein the folded-over end section (5) is welded only to the fabric layer (4) of the bag body (1) which faces the folded-over end section (5).

2. A method for sealing a bag body made from a tubular woven fabric, said fabric is made from monoaxially drawn polymer strips, in particular polyolefin strips or polypropylene strips, in which at least two fabric layers are joined by means of a seam, wherein the seam (12) is formed as welding seam (12) comprising a plurality of spaced-apart welding spots, wherein the welding of the two fabric layers of the end section is carried out in the non-folded-over state of the flat end section, the welded end section is subsequently folded over, and the folded-over end section (5) is finally joined, preferably by gluing, only to the fabric layer (4) of the bag body (1) which faces the folded-over end section, **characterized in that** the welded seam (12) is formed with a length corresponding to the width of the bag body.

3. The method for sealing a bag body as claimed in claim 1 or 2, **characterised in that** said welding spots are arranged in several rows, wherein welding spots of one row are arranged offset to the welding spots of an adjacent row.

4. The method for sealing a bag body as claimed in claims 1, 2 or 3, **characterised in that** said welds are made using a heat welding technique selected from a group of techniques including ultrasonic welding and laser welding.

5. The method for sealing a bag body as claimed in claims 1, 2, 3 or 4 **characterised in that** a separating layer is inserted in the bag body or a separating layer is applied in order to prevent a welding-together of the fabric layer facing the folded-over end section and the fabric layer of the bag body facing away from the folded-over end section.

6. The method for sealing a bag body as claimed in claim 5 **characterised in that** the material of the inserted separating layer has a higher thermal conductivity than that of the fabric of said bag and wherein the applied separating layer is in the form of a metallic varnish.

7. The method for sealing a bag body as claimed in claims 1 to 6 **characterised in that** the welded seam is formed with a width of at most 10 cm, preferably at most 8 cm, preferably at most 5 cm, preferably at most 3 cm.

8. The method for sealing a bag body as claimed in claims 1 to 7 **characterised in that** the sum of the areas of said welding spots is less than 50% of the total area of the welded seam, preferably less than 25%, more preferably less than 15%.

9. The method for sealing a bag body as claimed in claims 1 to 8, **characterised in that** said welding spots are provided at a density per square centimetre of at least 1, preferably at least 2, more preferably at least 3.

10. The method for sealing a bag body as claimed in claims 1 and 3 to 9, wherein, starting from the fabric layer which is uppermost as a result of the folding-over, only a number of fabric layers which lie directly on top of one another corresponding to half the total number of fabric layers plus one are joined together by ultrasonic welding.

11. A bag (1), preferably of cushion shape, made from a tubular woven fabric said fabric made from monoaxially drawn polymer strips, in particular polyolefin strips or polypropylene strips, which is sealed on one or both sides, wherein at least one side of said bag is closed with at least one welded seam (12) comprising a plurality of spaced-apart welding spots (13) and wherein the welded seam (12) is formed with a length corresponding to the width of the bag body, **characterized in that** at least one side is closed with a folded-over end section (5) such that said folded-over end section (5) is welded using a welded seam (12) only to the fabric layer (4) of the bag body (1) which faces the folded-over end section (5).

12. A bag (1), preferably of cushion shape, made from a tubular woven fabric said fabric made from monoaxially drawn polymer strips, in particular polyolefin strips or polypropylene strips, which is sealed on one or both sides, wherein at least one side of said bag is closed with at least one welded seam (12) comprising a plurality of spaced-apart welding spots (13), and wherein it has a folded-over end section with two fabric layers welded together, wherein this folded-over end section joins, preferably by gluing, only to the fabric layer (4) of the bag body (1) which faces the folded-over end section (5), **characterized in that** the welded seam (12) is formed with a length corresponding to the width of the bag body.

## Revendications

1. Procédé pour fermer un corps de sac (1) en un tissu tubulaire composé de petites bandes de polymère, en particulier de polyoléfine, de préférence de polypropylène, étirées monoaxialement, où au moins deux couches de tissu (3, 4, 6, 7) sont reliées au moyen d'une couture (12), dans lequel la couture (12) est réalisée en tant que cordon de soudure (12) comprenant une pluralité de points de soudure (13) disposés à distance les uns des autres et dans lequel le cordon de soudure (12) est réalisé avec une longueur correspondant sensiblement à la largeur du corps de sac,
**caractérisé en ce qu'**une section d'extrémité plate du corps de sac (1) présentant au moins une extrémité ouverte (2) est repliée et reliée au corps de sac (1) à l'aide du cordon de soudure (12), dans lequel la section d'extrémité (5) repliée est soudée seulement avec la couche de tissu (4) du corps de sac (1) tournée vers la section d'extrémité (5) repliée.

2. Procédé pour fermer un corps de sac (1) en un tissu tubulaire composé de petites bandes de polymère, en particulier de polyoléfine, de préférence de polypropylène, étirées monoaxialement, où au moins deux couches de tissu (3, 4, 6, 7) sont reliées au moyen d'une couture (12), dans lequel la couture (12) est réalisée en tant que cordon de soudure (12) comprenant une pluralité de points de soudure (13) disposés à distance les uns des autres, dans lequel la soudure des deux couches de tissu de la section d'extrémité se fait dans l'état non replié de la section d'extrémité plate, ensuite la section d'extrémité soudée est repliée et enfin la section d'extrémité repliée est seulement reliée à la couche de tissu (4) du corps de sac (1) tournée vers la section d'extrémité (5) repliée, de préférence par collage,
**caractérisé en ce que** le cordon de soudure (12) est réalisé avec une longueur correspondant sensiblement à la largeur du corps de sac.

3. Procédé selon la revendication 1 ou 2, **caractérisé en ce que** les points de soudure sont disposés en plusieurs rangées, dans lequel des points de soudure d'une rangée sont disposés par rapport aux points de soudure d'une rangée adjacente en quinconce.

4. Procédé selon la revendication 1, 2 ou 3, **caractérisé en ce que** la soudure est effectuée en tant que soudage par ultrasons ou soudage par laser.

5. Procédé selon la revendication 1, 2, 3 ou 4, **caractérisé en ce que** pour éviter un soudage l'une avec l'autre de la couche de tissu tournée vers la section d'extrémité repliée et de la couche de tissu du corps de sac opposée à la section d'extrémité repliée, une couche de séparation est insérée dans le corps de sac ou une couche de séparation est appliquée.

6. Procédé selon la revendication 5, **caractérisé en ce que** la couche de séparation présente une plus grande conductivité thermique que le tissu de sac, dans lequel une laque à base de métal est appliquée.

7. Procédé selon l'une quelconque des revendications 1 à 6, **caractérisé en ce que** le cordon de soudure est réalisé avec une largeur de 10 cm maximum, de préférence de 8 cm maximum, de préférence de 5 cm maximum, de préférence de 3 cm maximum.

8. Procédé selon l'une quelconque des revendications 1 à 7, **caractérisé en ce que** les points de soudure sont appliqués de telle manière que la somme des surfaces des points de soudure est inférieure à 50 %, de préférence inférieure à 25 %, en particulier inférieure à 15 % de la surface du cordon de soudure.

9. Procédé selon l'une quelconque des revendications 1 à 8, **caractérisé en ce que** la pluralité de points de soudure disposés à distance les uns des autres est appliquée à une densité d'au moins 1, de préférence d'au moins 2, de préférence d'au moins 3 points de soudure au cm².

10. Procédé selon l'une quelconque des revendications 1 et 3 à 9, **caractérisé en ce que** partant de la couche de tissu venant se placer tout en haut en raison du repli, seul un nombre de couches de tissu directement superposées est relié l'une à l'autre par soudage par ultrasons, qui correspond à la moitié augmentée d'un du nombre total de couches de tissu.

11. Sac (1), de préférence en forme de coussin, en un tissu tubulaire composé de petites bandes de polymère, en particulier de polyoléfine, de préférence de polypropylène, étirées monoaxialement, qui est fermé d'un ou des deux côtés, dans lequel au moins un côté du sac est fermé avec au moins un cordon de soudure (12), qui présente une pluralité de points de soudure (13) disposés à distance les uns des autres, et dans lequel le cordon de soudure (12) est réalisé avec une longueur correspondant sensiblement à la largeur du corps de sac,
**caractérisé en ce qu'**au moins un côté fermé présente une section d'extrémité (5) repliée, qui est reliée seulement à la couche de tissu (4) du corps de sac (1) tournée vers la section d'extrémité (5) repliée au moyen du cordon de soudure (12).

12. Sac (1), de préférence en forme de coussin, en un tissu tubulaire composé de petites bandes de polymère, en particulier de polyoléfine, de préférence de polypropylène, étirées monoaxialement, qui est fermé d'un ou des deux côtés, dans lequel au moins un côté du sac est fermé avec au moins un cordon de soudure (12), qui présente une pluralité de points de soudure (13) disposés à distance les uns des autres, et dans lequel il comprend une section d'extrémité repliée avec deux couches de tissu soudées l'une avec l'autre, dans lequel cette section d'extrémité repliée est seulement reliée à la couche de tissu (4) du corps de sac (1) tournée vers la section d'extrémité (5) repliée, de préférence par collage,
**caractérisé en ce que** le cordon de soudure (12) est réalisé avec une longueur correspondant sensiblement à la largeur du corps de sac.
